# EUROPEAN PATENT APPLICATION

(11) **EP 2 292 090 A1**
(43) Date of publication of application: **09.03.2011**
(21) Application number: 09169418.2
(22) Date of filing: 03.09.2009
(51) Int. Cl.: A01K 97/02

(54) **A Device for Dispersing Fish Bait in a Body of Water**

(71) Applicant: Hardy & Greys Ltd, Alnwick Northumberland NE66 2PF (GB)
(72) Inventor: Temple, James Alexaner, Northumerland, NE66 2WX (GB)
(74) Representative: Vinsome, Rex Martin

(57) **Abstract**

A device 100 for dispersing fish bait in a body of water. The device 100 has first and second body portions 102, 104 which are able to move relative to one other between first and second positions. The first and second body portions each have a plurality of apertures 106 extending therethrough. In the first position a plurality of the apertures 106 in each body portion are in alignment and in the second position fewer apertures in each body portion are in alignment. The device also has orientation means 114 for causing the first and second body portions to move to the first position relative to each other when the device is immersed in water.

## Description

The present invention relates to a device for dispersing fish bait in a body of water.

A spod is a device consisting of a hollow tube with a buoyant nose cone and is used to carry small fish baits long distances and deposit them in an area of a lake where a person is fishing. A spod is attached to the end of a fishing line when filled with bait before being cast out into the water using a fishing line. When the spod lands in the water, the buoyant nose cone causes the spod to invert such that the bait falls out through the open end into the water.

Centrifugal forces keep most of the bait in the spod during casting, however the open end of the spod can cause some bait to spill out of the back. This problem has been addressed by a number of designs but all of the existing arrangements suffer from drawbacks.

GB2355171 discloses a spod design having two hinged gates at its rear (see figure 1). These gates prevent some 'spod spill' but are easily broken off and may get caught in the fishing line used to cast out the spod, thereby preventing the gates from opening/closing and potentially causing damage to both the spod and the line. Also, the gates are designed to close when a person retrieves the spod so as to present a streamlined surface to the water through which the spod is moved which makes it easier to pull the spod back through the water. However, if the gates become jammed e.g. by becoming caught in the fishing line used to cast the spod, it is more difficult to retrieve the spod as it does not present a streamlined surface to the water through which it moves.

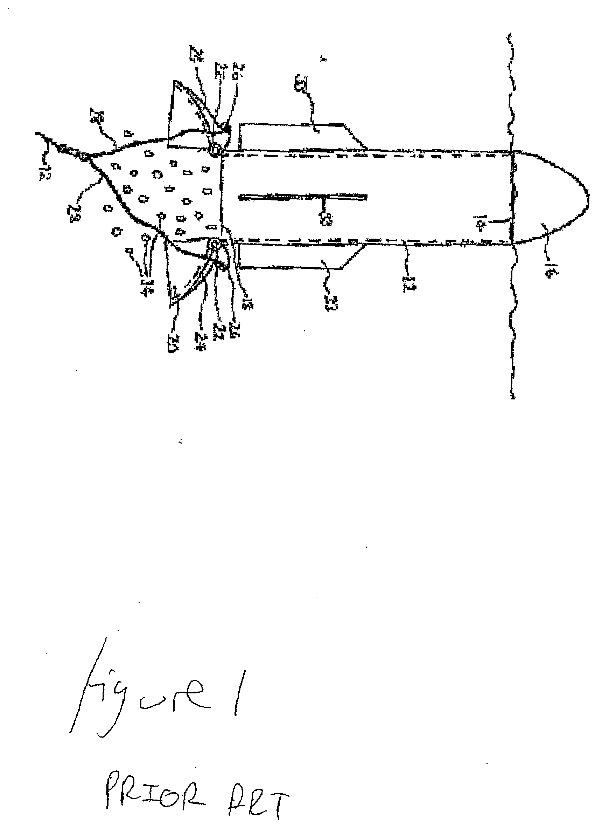

Another disadvantage with the spod in figure 1 is that it only prevents spod spill during part of the casting process when cast using a fishing line. The gates, previously mentioned, are designed to close when the string connecting them to a fishing line is under tension. In the part of a casting operation when a spod is swung over an angler's shoulder tension in the string attached to the gates provides the centripetal force on the spod to keep it moving in a substantially circular path. However, when the spod becomes air borne and begins to move away from the angler it will follow a parabolic path on which in flight the only forces acting on it will be gravity and air resistance. At such a point during casting the string attached to the gates will no longer be under tension and the gates will be free to swing open resulting in spod spill during flight.

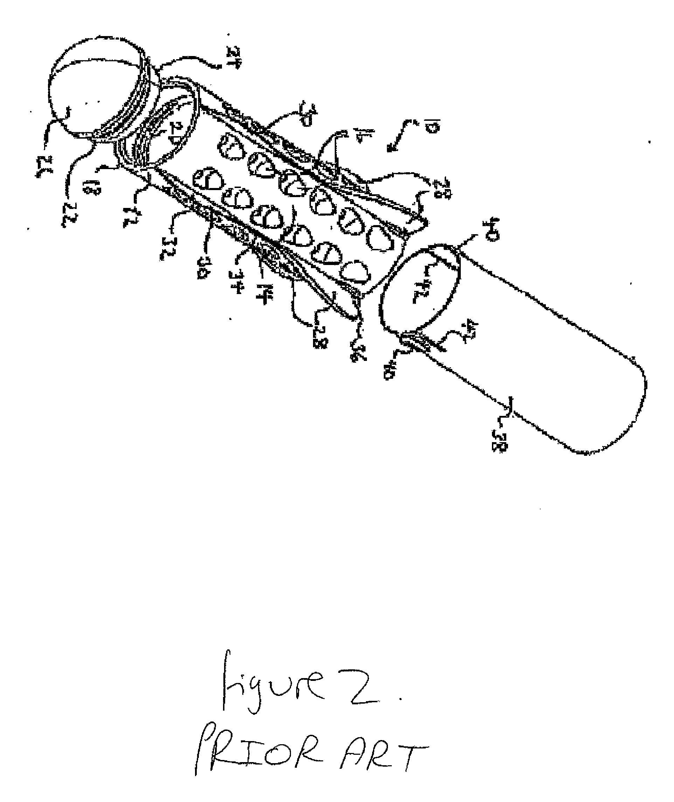

Most spods also have holes along the sides of their bodies to facilitate quick emptying in the water. EP1721521 discloses the use of inserts to block some of these holes to control how fast the spod empties in the water (see figure 2). A problem with this design is that if the insert is set such that a hole in the side of the spod is open, that hole remains open during casting of the spod which could result in spod spill while the spod is cast.

Another disadvantage associated with the spod in EP1721521 is the requirement for the insert to be partially split so as to allow the lugs thereon to move into and out of engagement with the apertures extending through the side of the spod. Such splits can cause the insert to be prone to breakage because they are structurally weak points in the spod design and may become larger through repeated impact of the spod with the surface of water after prolonged use.

Furthermore, if such an insert is used to block all of the apertures in the side of a spod there is the potential that not all of the bait in the spod will be dispensed. If the side apertures in the spod are blocked then water, air and fishing bait are required to enter and leave through the same aperture at the end of the spod. After the spod impacts water it inverts allowing fishing bait to fall out of its end. Water then begins to fill the spod which pushes a pocket of air within the spod resulting in a suction effect on the bait that hasn't already fallen out. The more water that enters the spod the greater this sucking force becomes until it is larger than the weight of the bait in the spod such that not all of the bait falls out of the spod into the surrounding water.

One other problem which arises if all of the side apertures of a spod are blocked, or no such apertures exist, is that the spod becomes more difficult to retrieve. On retrieval a spod is dragged backwards through water. However, as a spod with all of its side apertures blocked is dragged backwards through water, the spod acts like a parachute and a drag force is experienced making it more difficult to retrieve.

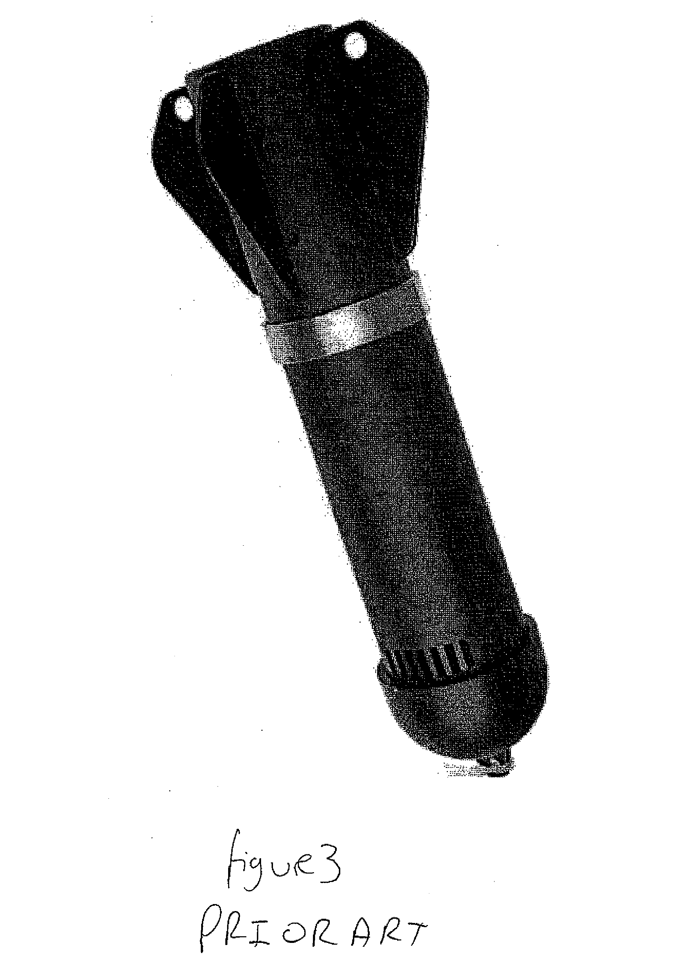

Side apertures have also been used on another manufacturer's spod (see figure 3). However, this spod also has a metal band that slides along the body of the spod, which serves two purposes. Firstly, the metal band slides under the influence of centrifugal forces to the nose of the spod when it is cast which provides the nose with extra weight so as to improve accuracy of the spod. Secondly, when the spod becomes inverted in the water due to the buoyant nose cone, the band slides back revealing holes just below the nose cone that allow water to enter the spod to facilitate quick emptying.

The problem with this design is that the size and number of holes in the side of the spod is limited by the thickness of the metal band. If the metal band were too thick it would make the spod quite heavy and more difficult to cast out. Also if the band is too heavy it will cause the spod to sink when it lands in water.

Another problem associated with this spod is that the metal band is prone to jamming thereby preventing it from sliding along the body of the spod. The band must have a cross sectional diameter greater than that of the body of the spod to enable it to slide. The problem is that the metal band is susceptible to tilting, as well as sliding, relative to the body of the spod, and because the metal band is made of harder material than the body of the spod, this causes it dig into the body which results in the jamming so experienced.

Preferred embodiments of the present invention seek to overcome the above disadvantages of the prior art.

According to a first aspect of the present invention there is provided a device for dispersing fish bait in a body of water, the device comprising:
a first body portion having a plurality of first apertures therethrough;
a second body portion having a plurality of second apertures therethrough, wherein the first body portion and the second body portion are adapted to move relative to each other between a first position in which a plurality of the first apertures are in communication with a plurality of the second apertures and a second position in which fewer first and second apertures are in communication with each other than in the first position; and
orientation means for causing the first and second body portions to move to the first position relative to each other when the device is immersed in water.

By providing first and second body portions moveable between a first position in which a plurality of the first apertures are in communication with a plurality of the second apertures and a second position in which fewer first and second apertures are in communication with each other than in the first position, this provides the advantage of enabling a larger proportion of the surface of the device to consist of apertures, thereby increasing the ease and speed with which fish bait may diffuse from the device into surrounding water.

In a preferred embodiment the orientation means comprises floatation means for enabling the device to float in water.

In another preferred embodiment the flotation means has a tapered body.

Such a tapered body will improve the aerodynamic properties of the device while in flight, thereby providing the advantages of improving the range and accuracy of the device during casting.

In a further preferred embodiment the tapered body is wider than the second body portion.

In a preferred embodiment the first body portion has at least one externally protruding first flange portion.

Such flange portions improve the aerodynamic properties of the device while in flight, thereby providing the advantages of improving the range and accuracy of the device during casting.

In another preferred embodiment the second body portion has at least one slot portion for at least partially receiving at least one first flange portion therein.

In a further preferred embodiment the device comprises sinking means adapted to cause the second body portion to sink in water.

This provides the advantage of allowing the first and second body portions to move relative to one another without the manipulation of a user so as to align the apertures extending therethrough such that water can enter the apparatus and fish bait may diffuse into the surrounding water.

In a preferred embodiment the sinking means is a metallic ring.

According to a second aspect of the present invention there is provided a device for dispersing fish bait in a body of water, the device comprising:
a body portion having at least one aperture;
blocking means moveable between a first position blocking the aperture and a second position allowing access to the aperture; and
retaining means for preventing removal of the blocking means from the device;
wherein the blocking means is adapted to move to the first position when the device is cast on a fishing line, and to move to the second position when the device is immersed in water.

By providing such blocking means which opens and closes without the manipulation of a user allows the volume into which fish bait is inserted into the device to remain sealed while the device is being cast. This provides the advantage of reducing the amount of fish bait which falls out of the device accidentally while in use i.e. spod spill.

In a preferred embodiment the blocking means is adapted to move between the first and the second positions under the influence of gravity.

In another preferred embodiment the retaining means comprises a cage and the blocking means comprises a substantially solid object having a cross sectional shape complimentary to that of at least one aperture.

In a further preferred embodiment the blocking means is a ball.

Using a ball ensures that the device presents a smooth face to water when it is moved backwards through such water and is subsequently retrieved after being cast. This provides the advantage of reducing the drag on the device during retrieval which thereby makes it easier to retrieve.

In another preferred embodiment the retaining means is adapted to be removed from the device.

According to a third aspect of the present invention there is provided a device as defined above, and blocking means and retaining means as defined above.

In a preferred embodiment the device comprises attachment means for attaching the device to an elongate object.

This provides the advantage of allowing the device to be cast into a body of water and subsequently retrieved.

A preferred embodiment of the invention will now be described, by way of example only and not in any limitative sense, with reference to the accompanying drawings in which:-
Figure 1 illustrates a perspective view of a first fish bait dispersing device of the prior art;
Figure 2 illustrates a perspective view of a second fish bait dispersing device of the prior art;
Figure 3 illustrates a perspective view of a third fish bait dispersing device of the prior art;
Figure 4 illustrates an exploded view of a fish bait dispersing device of the present invention;
Figure 5 illustrates a perspective view of the device in figure 4 in a first configuration;
Figure 6 illustrates a perspective view of the device in figure 4 in a second configuration;
Figure 7 illustrates fish bait falling from within the device in figure 6;
Figure 8 illustrates a perspective view of the device in figure 4 being dragged backwards through water; and
Figure 9 illustrates a perspective view of a device of the present invention adapted for interchangeable use with one of two means for attachment to a fishing line.

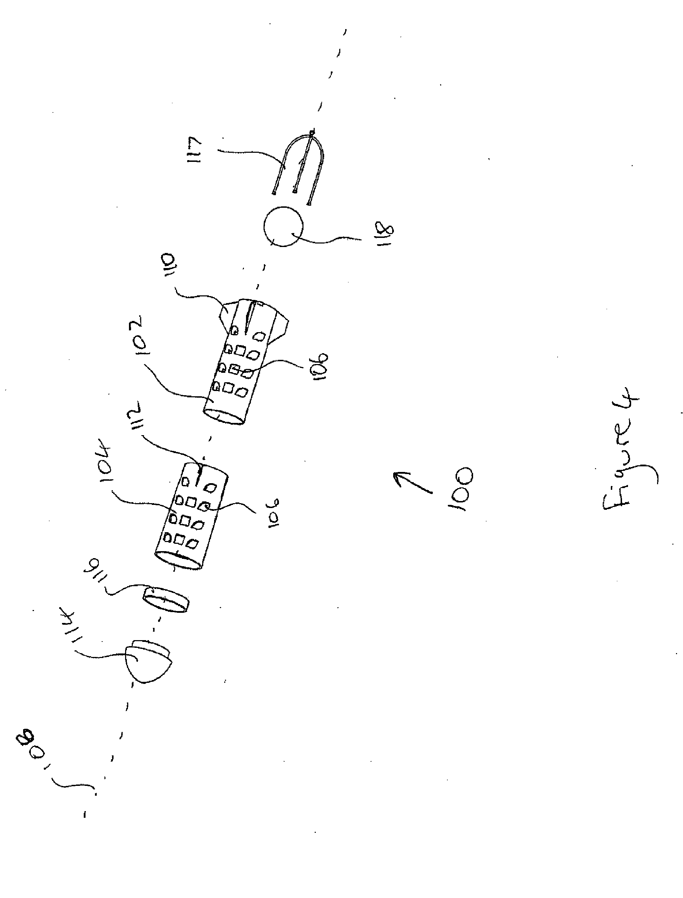

With reference to figure 4 a fish bait dispersing device 100 for dispersing fish bait in a body of water according to the present invention will now be described. The device 100 has first and second tubular body portions 102, 104 each with a number of apertures 106 at similar positions extending there through.

The first and second body portions 102, 104 have different first and second cross sectional diameters respectively such that the first body portion 102 may be received within the second body portion 104 allowing them slide relative to one another along axis 108.

When the first and second body portions 102, 104 are in a first position relative to one another the apertures 106 extending through both the first and second body portions 102, 104 are not in alignment, whereas in a second position relative to one another the apertures 106 are in alignment.

The first body portion 102 has four externally protruding fins 110 at one end thereof for improving the aerodynamic properties of the device 100 while in flight. The second body portion 104 has corresponding slot portions 112 for receiving the fins 110 when the first body portion 102 is slid entirely within the second body portion 104.
A flotation portion 114 in the shape of a cone is attached to the first body portion 102 at the opposite end to that adjacent the fins 110 thereby sealing the aperture extending through the first body portion 102 along axis 108. The flotation portion 114 must be sufficiently buoyant to enable the device 100 to float in water. The conical flotation portion 114 has a maximum width which is greater than the outer diameter of the second body portion 104 so as to restrict the extent to which the first and second body portions 102, 104 can slide relative to one another along axis 108 in conjunction with the fins 110 and slots 112.

The device 100 is also equipped with a heavier portion 116 e.g. a metallic ring, which is attached to the second body portion 104. The heavier portion 116 must be of sufficient density to cause the second body portion 104 to sink in water.

The device 100 may also have attached to it a blocking portion which is made up of a cage 117 and ball 118 for blocking the end of the tubular first body portion 102 adjacent the fins 110. The cage 117 may be permanently or removably attached to the first body portion 102 such that the ball 118 is able to move within the cage 117. In one position the ball 118 blocks the end of the tubular first body portion 102 adjacent to where the cage 117 is attached and the fins 110 extend. In another position the ball 118 moves within the cage 117 thereby unblocking that same end.

The operation of the fish bait dispersing device 100 shown in figure 4 will now be described.

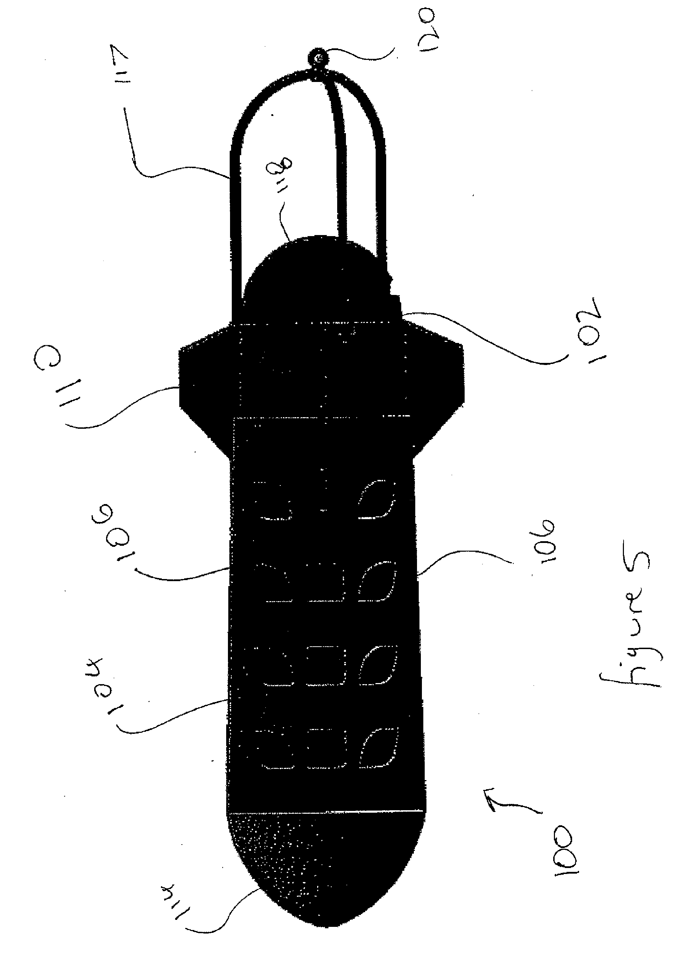

The first and second body portions 102, 104 are slidably moved relative to one another such that the apertures 106 extending through them are out of alignment and are closed by the corresponding first or second body portion 102, 104 respectively, see figure 5. The ball 118 is removed from the end of the first body portion 102 which it is adapted to engage and fish bait is inserted into the volume defined within the cylindrical first body portion 102 before reengaging the ball 118 with the first body portion 102 thereby enclosing the fish bait within the first body portion 102.

The device 100 is then attached to a fishing line (not shown) using a line engaging portion 120 comprising a ring attached to the cage 117. The device 100 is then cast out into a body of water using the fishing line to which it is attached.

During the casting process, centrifugal forces keep the fish bait enclosed within the first body portion. Such forces act on the ball 118 and force it into engagement with the end of the first body portion 102 it is adapted to engage. Centrifugal forces also act on the heavier portion 116 forcing the second body portion 104, to which the heavier portion 116 is attached, into engagement with the flotation portion 114. As illustrated in figure 5, when the first and second body portions 102, 104 are forced into such a position relative to one another the apertures 106 extending through them are misaligned and the fish bait is therefore enclosed within the first body portion 102.

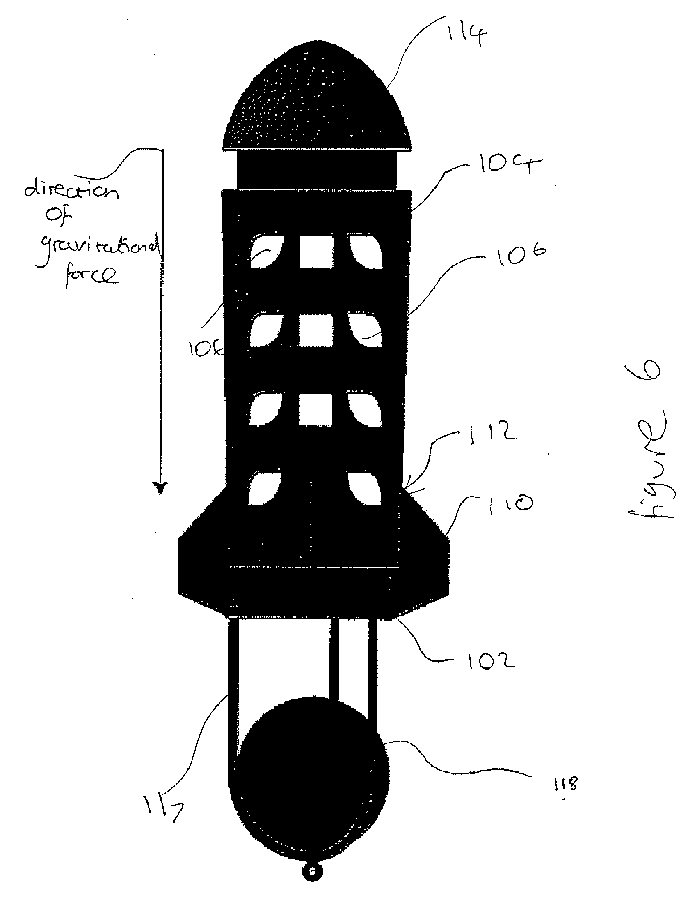

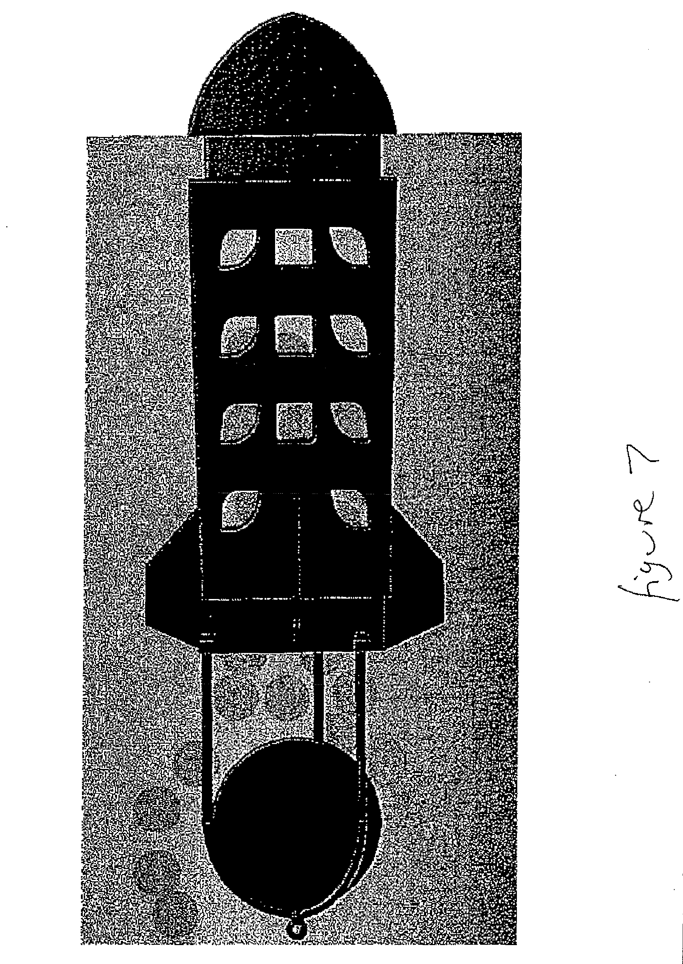

With reference to figure 6, when the device 100 lands in water the flotation portion 114 floats and the heavier portion 116 sinks thereby causing the device 100 to invert. Such an inversion causes the ball 118 to move under the force of gravity within the cage 117 away from the first body portion 102 such that fish bait may fall out of the tubular first body portion 102, see figure 7. The sinking of the heavier portion 116 also causes the first and second body portions 102, 104 to move relative to one another into such a position that the apertures 106 extending through them are in alignment which provides further access to the volume within the first body portion and allows fish bait to diffuse into the surrounding water quickly.

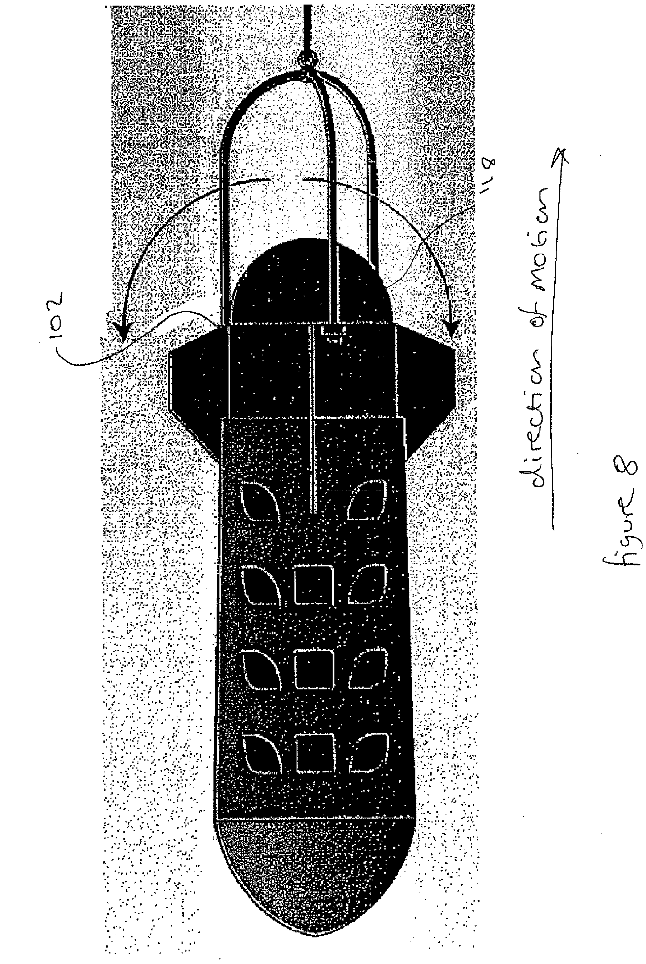

With reference to figure 8, after the fish bait has been dispersed the device 100 is drawn back to shore by reeling in the fishing line to which it is attached. As the device 100 is pulled backwards through the water, the water exerts a resistance force on the ball 118 urging it back into engagement with the first body portion 102 such that the device 100 presents a smooth surface to the water through which it moves thereby making it easier to reel the device 100 back to shore due to a minimization of drag forces.

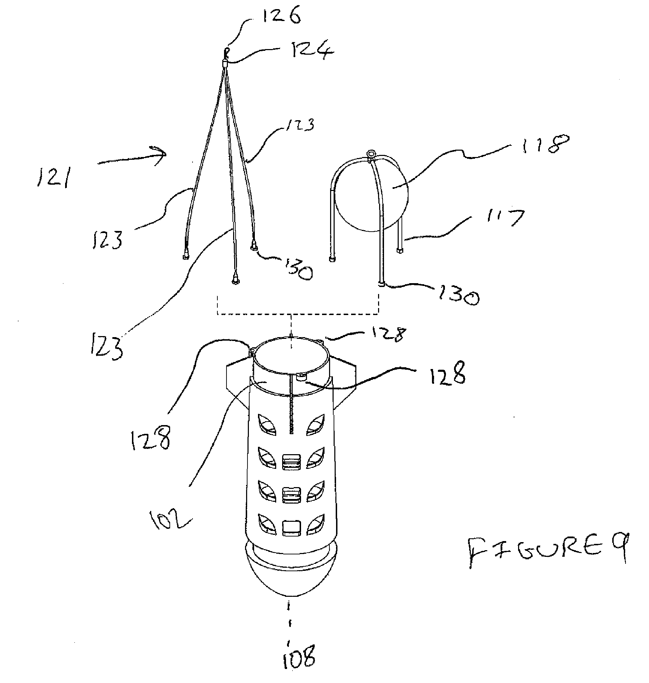

The device 100 however need not necessarily be used in conjunction with a cage 117 and ball 118. The device 100 may instead be attached to a fishing line using the attachment portion 121 in figure 9. Such an attachment portion 121, which is made from a single moulded body, comprises three flexible strips 123, each adapted to be attached to the first body portion 102, so fixed together adjacent a line mounting portion 124 comprising a hook 126 or ring (not shown).

With further reference to figure 9, the manner in which the cage 117 and attachment portion 121 are attached to the first body portion 102 shall now be described. The first body portion 102 has three mounting members 128 which each comprise a hook lying in a plane perpendicular to axis 108. These hook like mounting members 128 are adapted to engage flange portions 130 at the ends of the flexible strips 123 of an attachment portion 121 or similar flange portions 130 at the ends of the rigid strips forming a cage 117. The mounting members 128 are hooked around the strips of the attachment portion 121 or the cage 117 substantially midway along their respective lengths before being moved relative to each other such that the flange portions 130 are brought into engagement with the mounting members 128.

It will be appreciated by persons skilled in the art that the above embodiments have been described by way of example only and not in any limitative sense, and that various alterations and modifications are possible without departure from the scope of the invention as defined by the appended claims. For example the ball 118 may not necessarily be a ball and does not need to be spherical. Also the second body portion 104 may have any number of fins 110 protruding therefrom.

## Claims

1. A device for dispersing fish bait in a body of water, the device comprising:
a first body portion having a plurality of first apertures therethrough;
a second body portion having a plurality of second apertures therethrough, wherein said first body portion and said second body portion are adapted to move relative to each other between a first position in which a plurality of said first apertures are in communication with a plurality of said second apertures and a second position in which fewer said first and second apertures are in communication with each other than in said first position; and
orientation means for causing said first and second body portions to move to said first position relative to each other when the device is immersed in water.

2. The device of claim 1, wherein said orientation means comprises floatation means for enabling said device to float in water.

3. The device of claim 2, wherein said flotation means has a tapered body.

4. The device of claim 3, wherein said tapered body is wider than said second body portion.

5. The device of any one of the preceding claims, wherein said first body portion has at least one externally protruding first flange portion.

6. The device of claim 5, wherein said second body portion has at least one slot portion for at least partially receiving at least one said first flange portion therein.

7. The device of any one of the preceding claims, further comprising sinking means adapted to cause said second body portion to sink in water.

8. The device of claim 7, wherein said sinking means is a metallic ring.

9. A device for dispersing fish bait in a body of water, the device comprising:
a body portion having at least one aperture;
blocking means moveable between a first position blocking said aperture and a second position allowing access to said aperture; and
retaining means for preventing removal of said blocking means from said device;
wherein said blocking means is adapted to move to said first position when said device is cast on a fishing line, and to move to said second position when said device is immersed in water.

10. The device of claim 9, wherein said blocking means is adapted to move between said first and said second positions under the influence of gravity.

11. The device of claim 9 or 10, wherein said retaining means comprises a cage and said blocking means comprises a substantially solid object having a cross sectional shape complimentary to that of at least one said aperture.

12. The device of claim 11, wherein said blocking means is a ball.

13. The device of any one of claims 9 to 12, wherein said retaining means is adapted to be removed from said device.

14. The device of any one of claims 1 to 8, further comprising blocking means and retaining means according to any one of claims 9 to 13.

15. The device of any one of the preceding claims, further comprising attachment means for attaching said device to an elongate object.
